# EUROPÄISCHE PATENTSCHRIFT

(11) **EP 1 393 607 B1**
(45) Veröffentlichungstag und Bekanntmachung des Hinweises auf die Patenterteilung: **16.04.2008**
(21) Anmeldenummer: 02724294.0
(22) Anmeldetag: 19.04.2002
(51) Int. Cl.: H05K 5/00, F24C 7/08, F25D 29/00

(54) **ADAPTER FÜR DIE MONTAGE VON ELEKTRISCHEN ODER ELEKTRONISCHEN KOMPONENTEN**
ADAPTER FOR MOUNTING ELECTRICAL OR ELECTRONIC COMPONENTS
ADAPTATEUR POUR LE MONTAGE DE COMPOSANTS ELECTRIQUES OU ELECTRONIQUES

(30) Priorität: 17.05.2001 DE 20108361 U
(43) Veröffentlichungstag der Anmeldung: 03.03.2004
(60) Teilanmeldung: 06017896.9
(73) Patentinhaber: BSH Bosch und Siemens Hausgeräte GmbH, 81739 München (DE)
(72) Erfinder: RAAB, Alfred, 73460 Hüttlingen (DE); WAIBLER, Matthias, 73491 Neuler (DE)
(86) Internationale Anmeldenummer: PCT/EP2002/004361
(87) Internationale Veröffentlichungsnummer: WO 2002/093993

(56) Entgegenhaltungen:
- EP-A- 0 776 079
- EP-A- 0 872 691
- EP-A- 0 874 435
- US-A- 5 301 437
- US-A- 5 366 185
- US-A- 5 375 921
- US-A- 5 455 743

## Beschreibung

Die vorliegende Erfindung betrifft einen Adapter für elektrische oder elektronische Komponenten, der in einen Rahmen einsteckbar und darin verrastbar ist.

Um bei der Fertigung von elektrischen Geräten wie insbesondere Haushaltsgeräten eine ökonomische Getrenntfertigung von mechanischen und elektrischen Komponenten zu ermöglichen und den Einbau insbesondere der elektrischen Steuerungskomponenten zu vereinfachen, ist es bekannt, Adapter zu verwenden die so konstruiert sind, dass sie einerseits eine schnelle und bequeme Montage der elektrischen oder elektronischen Komponenten an ihrem Körper erlauben, und die über Rastarme verfügen, mit denen sie schnell und bequem in einem hierfür vorgesehenen Rahmen des Gehäuses des Geräts befestigbar sind. Derartige Adapter kommen z.B. zum Einsatz, um die Steuerelektronik eines Kältegeräts einschließlich von einem Benutzer zu betätigender Schalter oder Regler und optischer Anzeigeelemente in einer Bedienblende zu montieren, die sich meist oberhalb einer Tür des Kältegeräts erstreckt.

Bisher ist es üblich, derartige Adapter und auch die Rahmen, in denen sie befestigt werden, für eine Vielzahl von Gerätemodellen jeweils individuell zu konstruieren. Es wäre zwar wünschenswert, über Adapter und Rahmen zu verfügen, die in einer Mehrzahl unterschiedlicher Stellungen aneinander befestigbar sind, um so Bedienblenden mit unterschiedlichem äußeren Erscheinungsbild aus identischen Teilen aufbauen zu können und so Konstruktions- und Fertigungskosten reduzieren zu können. Dabei ergibt sich jedoch das Problem, dass die Bedien- oder Anzeigeelemente, die an einem solchen Adapter montiert werden sollen, an der Vorderseite der Bedienblende erreichbar bzw. sichtbar sein müssen. Voraussetzung hierfür ist, dass der Rahmen, in dem der Adapter montiert wird, zahlreiche oder große Öffnungen aufweist, durch die die Bedienelemente durchführbar oder die Anzeigeelemente sichtbar sind. Diese Öffnungen beeinträchtigen jedoch die Formbeständigkeit des Rahmens bei Belastung, so etwa, wenn ein Benutzer auf eine Taste drückt, die eines der an dem Adapter montierten Bedienelemente sein kann. Folge einer solchen Verformung kann sein, dass die Rastverbindung zwischen Rahmen und Adapter sich löst, und dass der Benutzer, anstatt eine Taste zu drücken versehentlich den Adapter mit samt allen daran montierten Komponenten ins Innere des Geräts drückt.

Aufgabe der vorliegenden Erfindung ist, einen Adapter für elektrische oder elektronische Komponenten anzugeben, der auch in einem Rahmen von eingeschränkter Formbeständigkeit sicher verankerbar ist.

Diese Aufgaben werden gelöst durch einen Adapter nach Anspruch 1.

Der erfindungsgemäße Adapter hat einen Körper, an dem wenigstens eine Komponente montierbar ist, und wenigstens eine flexible Rastzunge, deren Gestalt und Orientierung am Körper eine Einsteckrichtung definiert, in der der Adapter in einen Rahmen einsteckbar und daran verrastbar ist. Die Rastzunge ist an einem Wurzelabschnitt mit dem Körper verbunden und trägt an einem sich im wesentlichen in der Einsteckrichtung erstreckenden, bezogen auf die Einsteckrichtung vor dem Wurzelabschnitt liegenden freien Abschnitt eine Rastnase, die vorgesehen ist, um hinter einem Vorsprung des Rahmens einzugreifen. Der Adapter ist dadurch gekennzeichnet, dass der freie Abschnitt in einer gegen den Wurzelabschnitt quer zur Einsteckrichtung versetzten Ebene liegt, die Rastnase sich an einer dem Wurzelabschnitt zugewandten Flanke des freien Abschnitts befindet und der Wurzelabschnitt und der freie Abschnitt durch einen flexiblen Abschnitt verbunden sind, der sich wenigstens zum Teil bezogen auf die Einsteckrichtung hinter dem Wurzelabschnitt erstreckt. Durch diese Kombination von Merkmalen wird erreicht, dass wenn die Rastzunge einer Zugbelastung entgegen der Einsteckrichtung ausgesetzt ist, z.B. weil ein Benutzer eine Taste drückt, die zu einer der an dem Adapter montierten elektrischen Komponenten gehört, der elastische Abschnitt aufgedehnt wird, woraus eine Schwenkbewegung resultiert, die einerseits die die Rastnase tragende Flanke des Rastarms stärker gegen die Kante des Rahmens drückt, an der der Rastarm im Eingriff ist, und andererseits auf eine Drehung des Rasthakens hinwirkt, die ein Abgleiten des Rasthakens von der Kante erschwert.

Wenn der Rahmen aufgrund der auf den Adapter ausgeübten Kraft eine Verformung erfährt und die Kante, an der die Rastnase im Eingriff ist, zurückweicht, so bewirkt hier die Verformung der Rastzunge, dass der Rasthaken dem Zurückweichen der Kante folgt und ein fester Eingriff bestehen bleibt. Vorzugsweise ist der flexible Abschnitt U-förmig gekrümmt. Dadurch wird eine gleichmäßige Verteilung der Beanspruchung durch Verformung über die Länge des flexiblen Abschnitts erreicht.

Weiterhin ist bevorzugt, dass der flexible Abschnitt zwei Arme umfasst, die in einer durch die die Rastnase tragende Flanke definierten Ebene nebeneinander verlaufen. Dies verleiht der Rastzunge eine große Beständigkeit gegen Verformung in dieser Ebene.

Einer vorteilhaften Ausgestaltung zufolge hat der freie Abschnitt auf wenigstens einem Teil seiner Länge einen T-Profil-Querschnitt. Dieser Querschnitt verleiht dem freien Abschnitt eine große Steifigkeit, so dass bei Einwirken einer Zugbelastung auf die Rastzunge diese praktisch ausschließlich im Bereich des flexiblen Abschnitts verformt wird. Dies verstärkt noch zusätzlich die Neigung der Rastnase, bei Zugbelastung einer zurückweichenden Kante des Rahmens zu folgen und sich dabei so zu drehen, dass ein Abgleiten von der Kante ausgeschlossen ist.

Vorzugsweise ist die die Rastnase tragende Flanke eine Flanke des Querbalkens des T-Profils, die der Flanke, von der aus sich das Bein des T-Profils erstreckt, gegenüberliegt. Diese Anordnung erlaubt es, dem Bein des T-Profils eine beträchtliche Länge zu geben und so den freien Abschnitt wirksam zu versteifen.

Eine bezogen auf die Einsteckrichtung vordere Kante des Beins des T-Profils erstreckt sich vorzugsweise im wesentlichen quer zu der Einsteckrichtung. Dadurch ist es möglich, durch Ausüben eines Drucks auf diese vordere Kante eine Schwenkbewegung der Rastzunge zu veranlassen, durch die die Rastnase von der Kante eines Rahmens, an der sie im Eingriff ist, zurückgezogen wird, so dass der Adapter mitsamt den daran befestigten Komponenten leicht vom Rahmen gelöst werden kann, um ihn auszutauschen oder Reparaturen vorzunehmen.

Einer Variante zufolge umfasst der freie Abschnitt einen Arm, der sich über den flexiblen Abschnitt hinaus bezogen auf die Einsteckrichtung nach hinten erstreckt. Ein solches Arm kann durch Kontakt mit einer Oberfläche eines Sicherungskörpers eine unerwünschte, zu einer Lockerung des Eingriffs am Rahmen führende Schwenkbewegung der Rastzunge zusätzlich erschweren.

Bevorzugt ist ferner, dass der freie Abschnitt in Bezug auf den Wurzelabschnitt zur Mitte des Körpers hin versetzt ist. Dadurch wird erreicht, dass im Fall einer Zugbelastung die Rastnase dazu neigt, sich von der Mitte des Körpers weg zu bewegen, so dass sie bei Montage des Adapters in einer Öffnung einer nach außen zurückweichenden Kante der Öffnung leicht folgen kann.

Für eine stabile Verankerung des Adapters sind vorzugsweise wenigstens vier Rastzungen vorgesehen. Je nach Länge des Adapters können aber auch mehr Rastzungen, z.B. sechs, verwendet werden.

Der Adapter ist vorteilhaft verrastbar in einer langgezogenen Öffnung eines Rahmens, wobei die Rastzungen jeweils an den Innenkanten der Öffnung eingreifen.

Um den Adapter in einer Mehrzahl von Positionen an dem Rahmen verrasten zu können, weist der Rahmen zweckmäßigerweise eine Mehrzahl von Formelementen auf, die jeweils mit einem komplementären Formelement des Adapters ein Eingriff bringbar sind, um den Adapter jeweils in einer der mehreren möglichen Positionen zu fixieren. Bei diesen Formelementen des Rahmens kann es sich insbesondere um Kerben an einem Rand der langgezogenen Öffnung handeln.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine perspektivische auseinandergezogene Darstellung einer Bedienblende eines Kältegeräts eines Adapters und einer mit Hilfe des Adapters in der Bedienblende montierbaren Steuerelektronik;
- Fig. 2: einen Schnitt durch die Bedienblende mit darin montiertem Adapter und Steuerelektronik in einer ersten Ebene;
- Fig. 3: eine perspektivische Ansicht einer der in Fig. 2 im Schnitt gezeigten Rastzungen;
- Fig. 4: eine Seitenansicht der Rastzunge aus Fig. 2 im unbelasteten und im zugbelasteten Zustand;
- Fig. 5: einen Schnitt analog dem der Fig. 2 in einer anderen Ebene; und
- Fig. 6: eine perspektivische Ansicht der in Fig. 5 im Schnitt gezeigten Rastzunge.

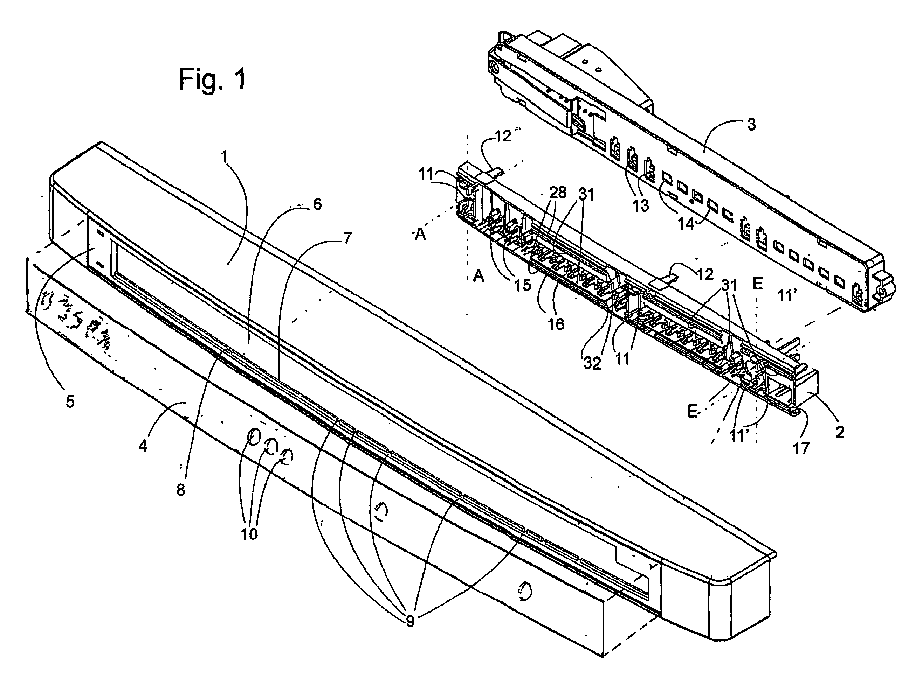

Fig. 1 zeigt den Aufbau einer Bedienblende eines Kältegeräts in einer auseinandergezogenen Darstellung. Die Bedienblende setzt sich zusammen aus einer Basisblende 1, die zur Befestigung an einem (nicht gezeigten) Gehäuse des Kältegeräts oberhalb von dessen Tür vorgesehen ist, einem Adapter 2, einer Elektronik 3, die Steuerfunktionen des Kältegeräts wahrnimmt, und einem Einleger 4. Die Basisblende 1 ist ein langgestreckter Hohlkörper aus Kunststoff, der z.B. im Spritzguss hergestellt ist. An einer einem Benutzer des Kältegeräts zugewandten Sichtseite weist er eine Vertiefung 5 auf, die so bemessen ist, dass sie den Einleger 4 formschlüssig aufnimmt, so dass sich eine bündige und geschlossene Vorderpartie der Bedienblende bildet. In der Vertiefung 5 ist eine langgestreckte Öffnung 6 gebildet, die sich über den größeren Teil der Rückseite des Einlegers 4 erstreckt und durch die bei fertig montierter Bedienblende Verbindungselemente zwischen an Durchbrechungen 10 des Einlegers angeordneten Tasten, Schaltern oder dergleichen sich durch den Adapter 2 zu entsprechenden Schaltelementen der Elektronik 3 erstrecken. Der Einleger 4 weist auch lokal transparente Abschnitte auf, durch die Leuchtanzeigeelemente der Elektronik 3, z.B. Siebensegmentanzeigen für die Zifferndarstellung etc., für einen vor dem Kältegerät stehenden Benutzer erkennbar sind. Für die Befestigung des Adapters 2 an der Bedienblende erstreckt sich entlang der oberen und unteren Kante der Öffnung 6 jeweils ein Steg 7 mit einer zum Boden der Vertiefung 5 parallelen, hinter die Ebene des Bodens 5 zurückspringenden Rastfläche 8. Der untere Steg 7 ist durch eine Mehrzahl von Kerben 9 unterbrochen.

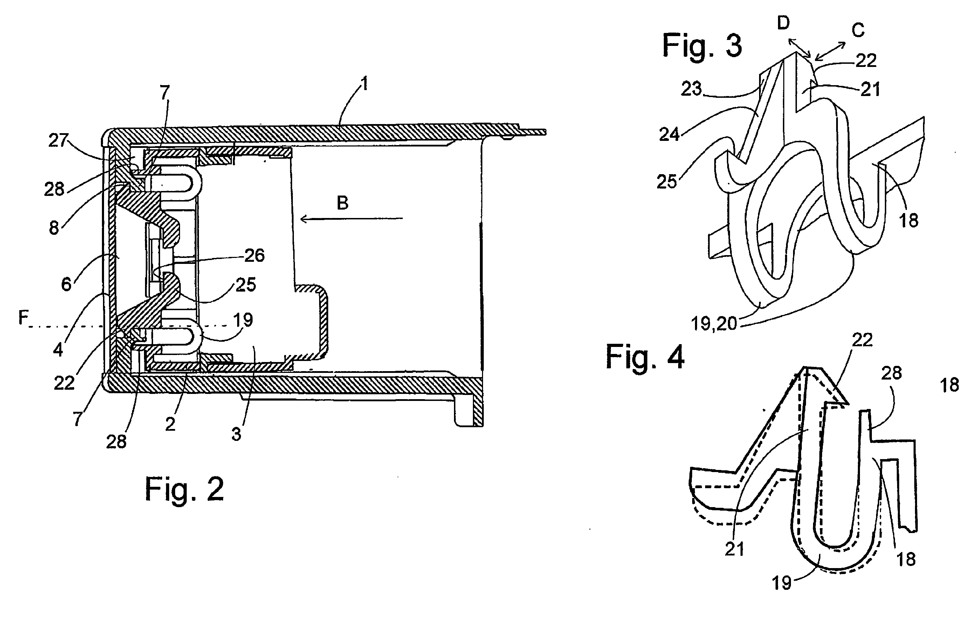

Der Adapter 2 ist ein einstückiges Kunststoff-Spritzgussteil. Er ist in die Basisblende 1 von deren Rückseite her einsteckbar und weist eine Mehrzahl von flexiblen Rastzungen 11 auf, die vorgesehen sind, um im verrastetem Zustand durch die Öffnung 6 der Basisblende 1 durchzugreifen und den Adapter 2 an den Rastflächen 8 des unteren und oberen Steges 7 zu verankern. Auf den Aufbau der Rastzungen 11 wird im folgenden anhand der Figs. 2 bis 5 noch genauer eingegangen.

Der Adapter 2 weist ferner eine Mehrzahl von stegförmigen Vorsprüngen 31 auf, die an der Vorderseite des Adapterkörpers so angeordnet sind, dass sie im verrasteten Zustand des Adapters 2 an der Öffnung zugewandten Seitenflächen der Stege 7 anliegen und so die Basisblende gegen ein Zusammendrücken stabilisieren.

Ein zweiter Satz Rastzungen 12 erstreckt sich vom Körper des Adapters 2 aus entgegen der Einsteckrichtung nach hinten. Sie dienen zur Verankerung der Elektronik 3 am Adapter 2.

Die Elektronik 3 ist in einem Kunststoffgehäuse untergebracht, das eine Mehrzahl von Öffnungen 13, 14 aufweist, hinter denen auf einer Platine der Elektronik 3 jeweils Schaltelemente bzw. Leuchtdioden angeordnet sind. Der Adapter 2 weist in einer zur Anordnung der Öffnungen 13, 14 komplementären Anordnung eine Mehrzahl von Halterungen 15, 16 auf, wobei die Halterungen 15 jeweils zum verschiebbaren Aufnehmen eines Stiftes (nicht dargestellt) dienen, von dem ein Ende sich durch eine der Durchbrechungen 10 des Einlegers 4 erstreckt und eine Taste trägt und das andere Ende auf das Schaltelement nähe der Öffnung 13 einwirkt. Die Halterungen 16 dienen zur festen Aufnahme von Lichtleitern (nicht dargestellt) , die von hinter den Öffnungen 14 angeordneten Leuchtdioden abgegebenes Licht an einen transparenten Bereich des Einlegers 4 heranführen.

Die Halterungen 15, 16 und die in sie einzuführenden Stifte und Lichtleiter sind jeweils so geformt, dass die Stifte bzw. Lichtleiter von der der Elektronik 3 zugewandten Rückseite des Adapters 2 her bis an einen Anschlag in die Halterungen 15, 16 einführbar sind und dadurch nach dem Zusammenfügen von Adapter 2 und Elektronik 3 gegen Herausfallen gesichert sind.

Da der Adapter 2 als von der Basisblende 1 getrenntes Teil ausgebildet ist, können beide in einfacher und preiswerter Weise durch schieberlose Auf-Zu-Werkzeuge gefertigt werden.

Um die Position des in der Basisblende 1 montierten Adapters 2 festzulegen, ist an letzterem ein Vorsprung 17 ausgebildet, der nach Anbringung des Adapters 2 an der Basisblende in eine der Kerben 9 des unteren Steges 7 eingreift. Jede Kerbe 9 definiert so eine mögliche Position, in der der Adapter 2 montierbar ist. Dadurch ist es möglich, jeweils identische Basisblende 1, Adapter 2 und Elektronik 3 für eine Vielzahl von unterschiedlichen Gerätemodellen einzusetzen und dennoch den Modellen ein unterschiedliches Aussehen zu verleihen; lediglich beim Einleger 4 ist eine Anpassung an das jeweilige Gerätemodell in Form einer spezifischen Positionierung der Durchbrechungen 10 und der transparenten Bereiche erforderlich.

Fig. 2 zeigt einen Schnitt durch die zusammengefügte Bedienblende entlang der in Fig. 1 mit strichpunktierten Linien A bezeichneten Ebene. Der Adapter 2 mit der daran befestigten Elektronik ist in die Basisblende von deren offener Rückseite her in der in der Fig. durch einen Pfeil B bezeichneten Einsteckrichtung eingesteckt und verrastet. Die Elektronik 3 ist hier der Übersichtlichkeit halber lediglich als ein Gehäuse ohne Inhalt dargestellt.

Die Ebene des Schnitts verläuft durch zwei Rastzungen 11, von denen eine in einer perspektivischen Ansicht in Fig. 3 gezeigt ist. Die Rastzungen 12 sind jeweils an einem Wurzelabschnitt 18 mit dem Körper des Adapters 2 an einer dem Einleger 4 zugewandten Vorderseite des Körpers verbunden. Vom Wurzelabschnitt 18 aus erstreckt sich ein U-förmiger flexibler Abschnitt 19 zunächst entgegen der Einsteckrichtung nach hinten, beschreibt dann eine Biegung von 180°, um anschließend, in einer bezogen auf den Wurzelabschnitt 18 zur Mitte des Adapters 2 hin versetzten Ebene F in Einsteckrichtung nach vorne zu verlaufen. Wie die perspektivische Ansicht der Fig. 3 zeigt, setzt sich der flexible Abschnitt 19 aus zwei parallel verlaufenden, U-förmig gekrümmten Bögen 20 zusammen, wodurch eine hohe Flexibilität des auf den flexiblen Abschnitt 19 folgenden freien Abschnitts 21 in Richtung des Pfeils C in Fig. 3 bei gleichzeitiger hoher Verwindungsfestigkeit gegen eine Verformung in Richtung des Pfeils D erreicht wird.

Die Vorsprünge 31 des Adapters 2 fluchten jeweils mit den freien Abschnitten 21 der Rastzungen, so dass sie in der Fig. 2 nicht sichtbar sind.

Eine Rastnase 22 zum Eingreifen an der Rastfläche 8 des Stegs 7 ist an einer dem Wurzelabschnitt 18 zugewandten Flanke des freien Abschnitts 21 angeordnet.

Von der von der Rastnase 22 abgewandten Flanke 23 des freien Abschnitts 21 erstreckt sich in senkrechter Richtung ein Versteifungssteg 24. Der Versteifungssteg 24 verleiht dem freien Abschnitt 21 in einer zur Einsteckrichtung senkrechten Ebene einen Querschnitt in Form eines T-Profils, wobei der Versteifungssteg 24 das Bein des T-Profils bildet.

Der Versteifungssteg 24 endet in einem Betätigungsabschnitt 25 mit einer dem Einleger 4 zugewandten, im wesentlichen senkrecht zur Einsteckrichtung bzw. parallel zur Ebene des Einlegers verlaufenden Vorderkante 26. Um die Rastzungen 11 von der Rastfläche 8 zu lösen, genügt es, bei entferntem Einleger 4 durch die Öffnung 6 der Basisblende 1 hindurch mit dem Finger oder einem Werkzeug einen Druck auf die Vorderkante 26 auszuüben, um so den flexiblen Abschnitt 19 aufzuweiten und die Rastnase 22 zur Mitte der Öffnung 6 hin zurückzuziehen.

Die Funktionsweise des Rastarms 11, wenn auf diesen eine Zugeblastung wirkt, z.B. durch Drücken einer Taste der Elektronik 3, wird mit Bezug auf Fig. 4 erläutert. Diese zeigt eine Seitenansicht der Rastzunge 11, einmal gestrichelt im unbelasteten Zustand und einmal mit durchgezogenen Linien in einem Zustand, in dem eine Zugkraft in Einsteckrichtung, d.h. nach oben in Fig. 4, auf die Rastnase 22 der Rastzunge einwirkt. Bei einer Rastzunge mit einem langgezogenen, nicht versteiften freien Abschnitt würde eine solche Zugkraft auf eine Drehung der Rastnase 22 im Bezug auf die Darstellung der Fig. 4 hinwirken, so dass das Abgleiten der Rastnase von der (in Fig. 4 nicht dargestellten) Rastfläche erleichtert wird. Bei der erfindungsgemäßen Rastzunge 11 ist eine solche Verformung jedoch ausgeschlossen. Statt dessen führt die Zugkraft dazu, dass der bezogen auf die Einsteckrichtung hinter dem Wurzelabschnitt 18 angeordnete flexible Abschnitt 21 seitwärts (nach links in Fig. 4) ausschwenkt, woraus eine Drehung der Rastnase im Gegenuhrzeigersinn und eine Verlagerung der Rastnase zum Wurzelabschnitt 18 hin, nach rechts in Fig. 4, resultiert.

Wie der Schnitt der Fig. 2 zeigt, ist eine Verlagerung der Rastnase 22 auf den Wurzelabschnitt 18 zu im montierten Zustand des Adapters 2 nicht möglich, da der Steg 7 dies verhindert. Die Zugbelastung führt hier also zu einem erhöhten Druck des freien Abschnitts 21 gegen den Steg in seitlicher Richtung und damit zu einem im Vergleich zum unbelasteten Zustand noch festeren Halt des Adapters 2 an der Basisblende 1.

Wie die Fig. 2 ferner zeigt, erstrecken sich an der Rückseite des Frontbereichs der Basisblende 1 parallel zu den Stegen 7 zwei nach hinten, zum Adapter 2 hin offene Kanäle 27. In diese Kanäle greift jeweils ein Steg 28 des Adapters ein, der in unmittelbarer Nachbar schaft des Wurzelabschnitts 18 an den Adapter angeformt ist. Dieser Steg 28 verhindert, dass sich die Basisblende 1 bei der Montage am Gerät oder bei einer darauf einwirkenden Belastung verformt und die Öffnung 6 sich verbreitert. Wenn nämlich eine solche Verformung oder Verbreiterung im Ansatz auftritt, stoßen die Stege 7 der Basisblende 1 mit ihren Rückseiten gegen die Stege 28 des Adapters, die, je nach dem, ob der Adapter 2 in sich steif oder dehnbar konstruiert ist, eine weitere Verbreiterung der Öffnung 6 verhindern, oder dieser Verbreiterung folgen dabei die Rastzungen 11 mitnehmen, so dass auch eine Verbreiterung der Öffnung 6 nicht zu einer Lockerung des Eingriffs der Rastzungen 11 an ihr führen kann.

Die Stege 28 begrenzen zusammen mit den Vorsprüngen 31 an der Vorderseite des Adapters zwei Kanäle 32 (siehe Fig. 1), die die Stege 7 der Basisblende 1 aufnehmen und fixieren.

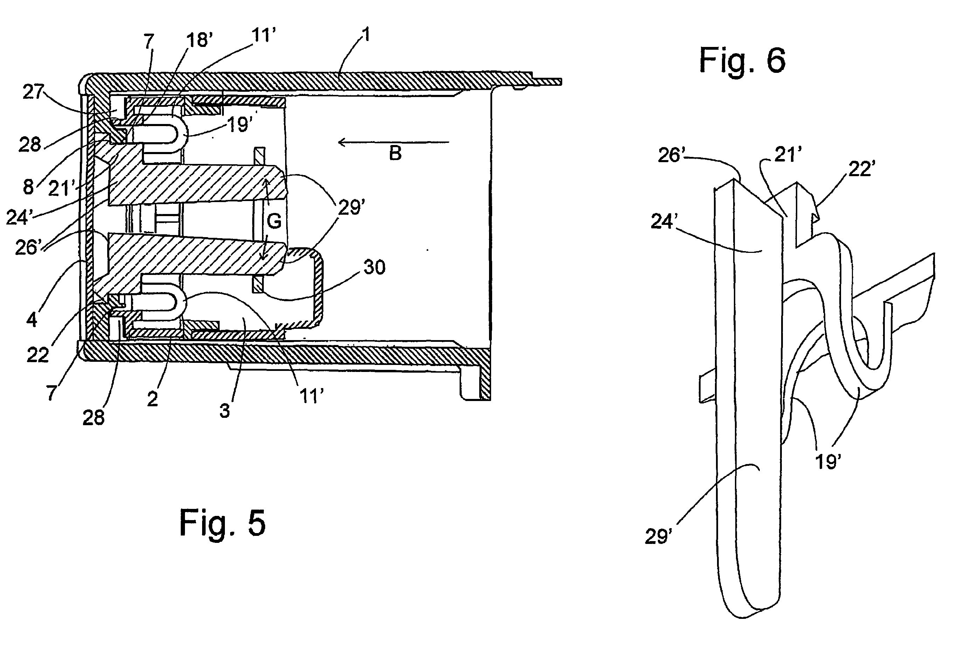

Fig. 5 zeigt einen Schnitt analog dem der Fig. 2 entlang der durch die Strichpunktlinien E in Fig.1 definierten Ebene. In diesem Schnitt ist eine zweite Ausgestaltung von Rastzungen 11 gezeigt, die sich von den mit Bezug auf die Figs. 2 bis 4 beschriebenen Rastzungen 11 lediglich durch die Gestalt ihres Versteifungsstegs 24' unterscheiden. Auch diese Versteifungsstege 24' haben eine der Vorderseite der Basisblende 1 bzw. dem Einleger 4 zugewandte Vorderkante 26', auf die ein Druck ausgeübt werden kann, um die Rastzungen 11' ins Innere der Öffnung 6 zurückzuschwenken und so von den Rastflächen 8 zu lösen. Die Verstärkungsstege 24' sind ferner durch einen Arm 29 nach hinten, entgegen der Einsteckrichtung verlängert, der sich z.B. seitlich neben dem Gehäuse der Elektronik 3 her oder durch eine Öffnung des Gehäuses der Elektronik 3 nach hinten erstrecken kann, so dass es durch Auseinanderspreizen der zwei einander gegenüberliegenden Arme 29 der zwei Rastzungen 11' in Richtung der Pfeile G möglich ist, deren Rastnasen zurückzuziehen und zu lösen.

Rastzungen wie die Rastzungen 11, 11' müssen selbstverständlich nicht in Kombination an einem Adapter 2 vorhanden sein; es kann ein Adapter auch Rastzungen lediglich vom Typ 11 oder lediglich vom Typ 11' aufweisen. Die Verwendung von Rastzungen lediglich vom Typ 11' ermöglicht das nachträgliche Lösen des Adapters und der Elektronik von der Basisblende 1 von deren Rückseite her, ohne dass hierfür der Einleger 4 entfernt werden müsste. Sie ermöglichen darüber hinaus auch eine Verriegelungssicherung, z.B. durch Aufstecken eines Sicherungsrings wie des in Fig. 5 gezeigten Rings 30 auf die freien Enden der Arme 29, die deren zum Lösen des Eingriffs erforderliche Auseinanderbewegung sperrt.

Ein Hindernis, dass diese Auseinanderbewegung sperrt, kann auch als fester Bestandteil des Adapters 2 oder der Elektronik 3 an diese angeformt sein, um eine Verrastung des Adapters 2 an der Basisblende 1 zu erreichen, die nachträglich nicht oder allenfalls mit speziellem Werkzeug wieder lösbar ist.

## Patentansprüche

1. Adapter (2) für elektrische oder elektronische Komponenten (3), mit einem Körper, an dem wenigstens eine Komponente (3) montierbar ist, und wenigstens einer flexiblen Rastzunge (11), die eine Einsteckrichtung (B) definiert, in der der Adapter (2) in einen Rahmen (1) einsteckbar und verrastbar ist, die an einem Wurzelabschnitt (18) mit dem Körper verbunden ist und an einem sich im wesentlichen in der Einsteckrichtung erstreckenden, bezogen auf die Einsteckrichtung vor dem Wurzelabschnitt (18) liegenden freien Abschnitt (21) eine Rastnase (22) trägt, **dadurch gekennzeichnet, dass** der freie Abschnitt (21) in einer gegen den Wurzelabschnitt (18) quer zur Einsteckrichtung versetzten Ebene (F) liegt, die Rastnase (22) sich an einer dem Wurzelabschnitt (18) zugewandten Flanke des freien Abschnitts (21) befindet und der Wurzelabschnitt (18) und der freie Abschnitt (21) durch einen flexiblen Abschnitt (19) verbunden sind, der sich wenigstens zum Teil bezogen auf die Einsteckrichtung hinter dem Wurzelabschnitt (18) erstreckt.

2. Adapter nach Anspruch 1, **dadurch gekennzeichnet, dass** der flexible Abschnitt (19) U-förmig gekrümmt ist.

3. Adapter nach Anspruch 1 oder 2, **dadurch gekennzeichnet, dass** der flexible Abschnitt zwei nebeneinander verlaufende Arme (20) umfasst.

4. Adapter nach einem der vorhergehenden Ansprüche, **dadurch gekennzeichnet, dass** der freie Abschnitt (21) auf wenigstens einem Teil seiner Länge einen T-Profil-Querschnitt hat.

5. Adapter nach Anspruch 4, **dadurch gekennzeichnet, dass** die die Rastnase (22) tragende Flanke eine Flanke des Querbalkens des T-Profils ist und das Bein (24, 24') des T-Profils sich von der gegenüberliegenden Flanke (23) des Querbalkens aus erstreckt.

6. Adapter nach Anspruch 5, **dadurch gekennzeichnet, dass** das Bein (24, 24') des T-Profils eine bezogen auf die Einsteckrichtung vordere Kante (26, 26') hat, die im wesentlichen quer zu der Einsteckrichtung verläuft.

7. Adapter nach einem der vorhergehenden Ansprüche, **dadurch gekennzeichnet, dass** der freie Abschnitt (21') einen Arm (29') umfasst, der sich über den flexiblen Abschnitt (19') hinaus bezogen auf die Einsteckrichtung nach hinten erstreckt.

8. Adapter nach einem der vorhergehenden Ansprüche, **dadurch gekennzeichnet, dass** der freie Abschnitt (21, 21') in Bezug auf den Wurzelabschnitt (18) zur Mitte des Körpers hin versetzt ist.

9. Adapter nach einem der vorhergehenden Ansprüche, **dadurch gekennzeichnet, dass** er wenigstens vier Rastzungen (11,11') aufweist.

## Claims

1. Adapter (2) for electrical or electronic components (3), with a body, which at least one component (3) is mountable, and at least one flexible detent tongue (11), which defines a plug-in direction (B), in which the adapter (2) is insertable and detentable in a frame (1), which is connected at a root section (18) with the body and carries a detent lug (22) at a free section (21) which extends substantially in the plug-in direction and lies in front of the root section (18) with respect to the plug-in direction, **characterised in that** the free section (21) lies in a plane (F) offset relative to the root section (18) transversely to the plug-in direction, the detent lug (22) is disposed at a flank of the free section (21) facing the root section (18) and the root section (18) and the free section (21) are connected by a flexible section (19) which extends at least for a part behind the root section (18) with respect to the plug-in direction.

2. Adapter according to claim 1, **characterised in that** the flexible section (19) is curved in U shape.

3. Adapter according to claim 1 or 2, **characterised in that** the flexible section comprises two arms (20) extending adjacent to one another.

4. Adapter according to one of the preceding claims, **characterised in that** the free section (21) has a T-profile cross-section on at least a part of its length.

5. Adapter according to claim 4, **characterised in that** the flank carrying the detent lug (22) is a flank of the crossbar of the T-profile and the leg (24, 24') of the T-profile extends from the opposite flank (23) of the crossbar.

6. Adapter according to claim 5, **characterised in that** the leg (24, 24') of the T-profile has an edge (26, 26') which is at the front with respect to the plug-in direction and which extends substantially transversely to the plug-in direction.

7. Adapter according to one of the preceding claims, **characterised in that** the free section (21') comprises an arm (29') which extends rearwardly out beyond the flexible section (19') with respect to the plug-in direction.

8. Adapter according to one of the preceding claims, **characterised in that** the free section (21, 21') is offset towards the middle of the body with respect to the root section (18).

9. Adapter according to one of the preceding claims, **characterised in that** it has at least four detent tongues (11, 11').

## Revendications

1. Adaptateur (2) pour des composants (3) électriques ou électroniques, comprenant un corps, sur lequel au moins un composant (3) peut être monté, et au moins une lame d'encliquetage (11) flexible, qui définit un sens d'emboîtement (B), dans laquelle l'adaptateur (2) peut être emboîté et encliqueté dans un cadre (1), laquelle lame est reliée sur une partie de racine (18) au corps et porte un ergot d'encliquetage (22) sur une partie (21) libre, s'étendant sensiblement dans le sens d'emboîtement et située devant la partie de racine (18) par rapport au sens d'emboîtement, **caractérisé en ce que** la partie (21) libre est disposée dans un plan (F) décalé vers la partie de racine (18) transversalement au sens d'emboîtement, lequel ergot d'encliquetage (22) se trouve sur un flanc, tourné vers la partie de racine (18), de la partie (21) libre et la partie de racine (18) et la partie (21) libre sont reliées par une partie (19) flexible, qui s'étend au moins en partie derrière la partie de racine (18) par rapport au sens d'emboîtement.

2. Adaptateur selon la revendication 1, **caractérisé en ce que** la partie (19) flexible est courbée en U.

3. Adaptateur selon la revendication 1 ou 2, **caractérisé en ce que** la partie flexible comporte deux bras (20) agencés l'un à côté de l'autre.

4. Adaptateur selon l'une quelconque des revendications précédentes, **caractérisé en ce que** la partie (21) libre a une section de profilé en T sur au moins une partie de sa longueur.

5. Adaptateur selon la revendication 4, **caractérisé en ce que** le flanc portant l'ergot d'encliquetage (22) est un flanc de la barre transversale du profilé en T et la jambe (24, 24') du profilé en T s'étend à partir du flanc (23) opposé de la barre transversale.

6. Adaptateur selon la revendication 5, **caractérisé en ce que** la jambe (24, 24') du profilé en T a une arête (26, 26') avant par rapport au sens d'emboîtement qui est agencé sensiblement transversalement au sens d'emboîtement.

7. Adaptateur selon l'une quelconque des revendications précédentes, **caractérisé en ce que** la partie (21') comporte un bras (29') qui s'étend au-delà de la partie (19') flexible vers l'arrière par rapport au sens d'emboîtement.

8. Adaptateur selon l'une quelconque des revendications précédentes, **caractérisé en ce que** la partie (21, 21') libre est décalée par rapport à la partie de racine (18) en direction du centre du corps.

9. Adaptateur selon l'une quelconque des revendications précédentes, **caractérisé en ce qu'**il présente au moins quatre lames d'encliquetage (11, 11').
